# EUROPÄISCHE PATENTSCHRIFT

(11) **EP 3 517 482 B1**
(45) Veröffentlichungstag und Bekanntmachung des Hinweises auf die Patenterteilung: **24.08.2022**
(21) Anmeldenummer: 19151621.0
(22) Anmeldetag: 14.01.2019
(51) Int. Cl.: B66F 9/075

(54) **FAHRERKABINE FÜR EIN FLURFÖRDERZEUG**
DRIVER'S CAB FOR AN INDUSTRIAL TRUCK
CABINE DE CONDUCTEUR POUR UN CHARIOT DE MANUTENTION

(30) Priorität: 24.01.2018 DE 102018101531
(43) Veröffentlichungstag der Anmeldung: 31.07.2019
(73) Patentinhaber: Jungheinrich Aktiengesellschaft, 22047 Hamburg (DE)
(72) Erfinder: Lemke, Frank, 24568 Kaltenkirchen (DE); Niebuhr, Michael, 22941 Bargteheide (DE); Ribbentrop, Klaus-Peter, 24558 Henstedt-Ulzburg (DE)
(74) Vertreter: Hauck Patentanwaltspartnerschaft mbB

(56) Entgegenhaltungen:
- DE-A1- 10 312 432
- US-A- 4 411 464
- US-A1- 2008 001 435

## Beschreibung

Die vorliegende Erfindung betrifft eine Fahrerkabine für ein Flurförderzeug. Bei Flurförderzeugen unterschiedlicher Bauart und Einsatzart kann eine Fahrerkabine mit einem Platz für den Fahrzeugführer vorgesehen sein. Der Platz kann in einer Fahrerkabine beispielsweise als ein Sitzplatz oder auch als ein Fahrerstandplatz ausgebildet sein. Es ist bekannt, eine entsprechende Fahrerkabine mit einem Fahrerschutzdach auszustatten. Das Fahrerschutzdach hat einerseits die Aufgabe zu erfüllen, eine möglichst gute Sicht auf die angehobene Last zu gewähren und andererseits den Fahrer vor herunterstürzenden Gegenständen zu schützen. Die Fahrerkabine mit dem Fahrerschutzdach muss dafür ausreichend stabil ausgebildet sein.

Aus dem Stand der Technik ist es bekannt, zwei Säulen an den Fahrzeugseiten des Antriebsteils vorzusehen. Diese Säulen können beispielsweise leicht nach vorn geneigt sein, wobei das Fahrerschutzdach dann als eine Krone mit einer entsprechenden Verstrebung ausgebildet ist.

Aus der US 2008/001435 A1 ist ein Flurförderzeug mit einem Fahrerschutzdach bekannt, dass vom zwei Säulen mit L-Profil getragen wird. In einer alternativen Ausgestaltung wird offenbart das Dach an dem Gerüst des Hubmast zu befestigen und eventuell weitere Säulen hinzuzufügen. Ferner offenbart die US 2008/001435 A1 einen Einstiegsbereich, der sich zwischen den Säulen erstreckt.

Aus der DE 103 12 432 A1 ist es bekannt ein Fahrerschutzdach mittels drei Säulen zu befestigen.

Aufgabe der vorliegenden Erfindung ist es, für ein Flurförderzeug eine Fahrerkabine bereitzustellen, die bei möglichst großer Stabilität eine gute Sichtbarkeit in das Arbeitsumfeld nach außen bietet.

Erfindungsgemäß wird die Aufgabe durch eine Fahrerkabine mit den Merkmalen aus Anspruch 1 gelöst. Vorteilhafte Ausgestaltungen bilden die Gegenstände der Unteransprüche.

Die erfindungsgemäße Fahrerkabine ist für ein Flurförderzeug vorgesehen, insbesondere für einen Schubmaststapler, bei dem eine Bedienperson durch ein Fahrerschutzdach abgesichert ist. Eine Besonderheit der erfindungsgemäßen Fahrerkabine besteht darin, dass das Fahrerschutzdach von vier Säulen getragen wird, wobei zwei als A-Säule und zwei als B-Säule ausgebildet sind. Da bei einem Flurförderzeug vorne und hinten und damit die Rolle der A- und der B-Säule nicht unmittelbar festgelegt ist, wird bei der erfindungsgemäßen Fahrerkabine definiert, dass die B-Säulen zu einem Lastteil des Flurförderzeugs weisen und zwischen diesen eine Abschlusswand angeordnet ist und dass zwischen den A-Säulen ein Einstiegsbereich vorgesehen ist.

Bei der erfindungsgemäßen Fahrerkabine sind die B-Säulen als ein Rohrprofil ausgebildet, beispielsweise als ein im Querschnitt rundes, ovales Rohrprofil oder als rundes Doppelprofil mit einer taillenartigen Einschnürung. Mindestens eine, bevorzugt beide A-Säulen sind aus einem Eckprofil gebildet, das zwei winkelig zueinander angeordnete Schenkel aufweist. Das Eckprofil ist als ein offenes Profil ausgestaltet, das zwei winkelig zueinander angeordnete, jeweils flache Schenkel aufweist. Der Vorteil der erfindungsgemäßen Fahrerkabine besteht darin, dass in der Verwendung des Eckprofils ein Profil zum Einsatz kommt, das eine Sicht aus der Fahrerkabine heraus auf den Arbeitsbereich und die Umgebung des Flurförderzeugs nur in s geringem Maße einschränkt. Anders als beispielsweise mit zwei breitflächigen Streben ausgestattete Fahrerkabinen, erzeugt ein Eckprofil mit zueinander im Winkel angeordneten Schenkeln eine deutlich geringere Einschränkung des Sichtfeldes. Auch die Verwendung von vier Säulen bewirkt, dass das für die Umsicht des Fahrers erforderliche Sichtfeld frei bleibt. Auch erlaubt die Steifigkeit des Eckprofils einen geringen Materialeinsatz, der ebenfalls zu einem freien Sichtfeld führt. Zudem verbraucht das Eckprofil wenig Platz, wodurch der Innenraum der Fahrerkabine gut genutzt werden kann. Bevorzugt ist das Eckprofil benachbart zu einem Fahrersitz oder einem Fahrerstandplatz positioniert.

In einer bevorzugten Weiterbildung sind die Schenkel des Eckprofils als flache Schenkel ausgebildet, die über einen gerundeten Übergangsbereich miteinander verbunden sind. Der Übergangsbereich bildet eine Außenkante der Fahrerkabine. Das Eckprofil für die erfindungsgemäße Fahrerkabine besteht im Wesentlichen aus einem Flachmaterial, das ungefähr mittig einen gerundeten Übergangsbereich besitzt, wobei sich die davon abstehenden Schenkel flach fort erstrecken und bevorzugt in Profillängsrichtung einen konstanten Winkel zueinander einschließen. Bevorzugt sind beide A-Säulen als Eckprofil ausgebildet, die A-Säulen müssen dabei nicht identisch ausgebildet sein.

In einer bevorzugten Weiterbildung sind Befestigungsmittel zur Befestigung der Fahrerkabine an einem Fahrzeugrahmen vorgesehen. Die Fahrerkabine ist in sich insgesamt ein fertig gebautes Schweißteil, das insgesamt als vormontierte Einheit an dem Fahrzeugrahmen des Flurförderzeugs befestigt wird. Bevorzugt können für diese Befestigung an dem dem Fahrerschutzdach gegenüberliegenden Ende an mindestens einem der Säulenpaare Befestigungsmittel, wie beispielsweise Ösen, Ringe, Öffnungen oder dergleichen vorgesehen sein, über die die Fahrerkabine montiert und am Fahrzeugrahmen befestigt wird.

In einer weiter bevorzugten Ausgestaltung ist das Fahrerschutzdach mit einem U-förmigen Flachprofil ausgebildet. Auf den Schenkeln des U-förmigen Flachprofils ist jeweils ein aufrecht stehendes Halteprofil angeordnet, an denen jeweils die Enden von zwischen den Schenkeln verlaufenden Querprofilen gehalten sind. Die Halteprofile können durch abgekantete Ränder des Flachprofils gebildet sein. Wie bei Fahrerschutzdächern bekannt, sind die Querprofile schräg gegenüber der Vertikalen an den stehenden Halteprofilen befestigt, so dass ein schräg nach oben gerichteter Blick nicht auf die Breitseite der Querstreben fällt, sondern diese nur teilweise oder bevorzugt nur an ihrer Schmalseite den Blick nach oben versperren. Alternativ kann auch ein Panoramadach aus Glas auf dem U-förmigen Flachprofil aufliegen.

In einer weiter bevorzugten Ausgestaltung verbindet ein Abschlussprofil die freien Schenkel des U-förmigen Profils. Auf diese Weise entsteht ein umlaufender Dachrahmen für das Fahrerschutzdach. Bevorzugt ist dieser umlaufende Dachrahmen mit den vier Säulen verbunden, wobei hierzu noch ein weiteres umlaufendes Rahmenprofil den Dachrahmen aus U-förmigem Profil und Abschlussprofil umgeben kann.

In einer bevorzugten Weiterbildung weist jede der beiden Seitenwände ein Zwischenblech auf, das endseitig mit A-Säule und B-Säule verbunden ist. Das Zwischenblech dient als Kern für den Aufbau der Seitenwand, die mit dem Zwischenblech im Zentrum eine Art von Sandwichstruktur bildet.

In einer bevorzugten Weiterbildung ist auf der zur Außenseite der Fahrerkabine weisenden Seite des Zwischenblechs ein bündig mit der A-Säule abschließendes oberes Verkleidungsblech angebracht. Insbesondere an dem Eckprofil schließt das obere Verkleidungsblech bündig mit einer der A-Säulen und ihrem Schenkel ab. Alternativ kann das obere Verkleidungsblech auch einstückig mit einem der Schenkel einer der A-Säulen ausgebildet sein. Indem das Zwischenblech an seine Befestigung an der A-Säule auf der Innenseite des Schenkels des Eckprofils angebracht ist, springt das Zwischenblech zurück, so dass das obere Verkleidungsblech bündig mit der A-Säule abschließen kann. Ferner ist auf der zum Innenraum der Fahrerkabine weisenden Seite des Trägerblechs ein unteres Verkleidungsblech unter Bildung einer Fuge gegenüber dem oberen Verkleidungsblech angebracht. Der besondere Vorteil eines nach innen versetzten Trägerblechs, an dem das untere Verkleidungsblech befestigt ist, besteht darin, dass das Trägerblech weiter innenliegend angebracht ist und das untere Verkleidungsblech so eine tiefere Fuge, insbesondere gegenüber dem oberen Verkleidungsblech, besitzt.

Auch im Bereich des Einstiegs in die Fahrerkabine kann auf einer Seite eine A-Säule mit einem Einstiegsblech ausgestattet sein. Der Einstiegsbereich ist dabei bevorzugt durch eine der A-Säulen begrenzt und auf seiner gegenüberliegenden Seite durch das an der anderen A-Säule angebrachte Einstiegsblech. Grundsätzlich sind auch Einstiegsbereiche möglich, bei denen Einstiegsbleche an beiden Seiten der A-Säule angebracht sind.

In einer bevorzugten Ausgestaltung der Fahrerkabine sind die Säulen mit dem Fahrerschutzdach und mit dem Zwischenblech der anderen Seitenwände verschweißt. Die Fahrerkabine bildet insgesamt eine Schweißkonstruktion, wobei durch den Einstiegsbereich lediglich die beiden A-Säulen an ihrem von dem Fahrerschutzdach fortweisenden Ende nicht direkt miteinander verbunden ist, sondern über einen Einstiegsträger.

In einer bevorzugten Weiterbildung besitzt die Abschlusswand einen Halteabschnitt für eine Fahrschutzscheibe. Die Abschlusswand der Fahrerkabine bildet den Übergang vom Antriebsteil zu einem Lastteil des Flurförderzeugs. Insbesondere bei Schubmaststaplern, aber auch bei anderen Flurförderzeugen mit einem Hubmast ist eine den Bereich zwischen Fahrerkabine und Lastteil zumindest teilweise bedeckende Fahrerschutzscheibe vorgesehen, die ein Hereingreifen oder einen sonstigen Kontakt mit dem Hubmast aus der Fahrerkabine heraus verhindert.

Für eine weitere Verbesserung der Sicht des Fahrers kann in mindestens einer der A-Säulen eine Sichtdurchbrechung vorgesehen sein. Diese ist bevorzugt mittig im gerundeten Übergangsbereich der A-Säule vorgesehen. Ist nur eine A-Säule als Eckprofil ausgebildet, so ist dieses bevorzugt benachbart zu einem Fahrplatz, insbesondere einem Fahrersitz oder einem Fahrerstandplattform ausgebildet.

Ein bevorzugtes Ausführungsbeispiel der erfindungsgemäßen Fahrerkabine wird anhand der nachfolgenden Figuren näher vorgestellt. Es zeigen:
- Fig. 1: eine perspektivische Ansicht von schräg oben auf eine Fahrerkabine,
- Fig. 2: eine perspektivische Ansicht einer noch nicht montierten Fahrerkabine mit Fahrerschutzdach,
- Fig. 3: eine Ansicht der Fahrerkabine mit einem Blick durch den Eingangsbereich auf eine Innenseite der Seitenwand und
- Fig. 4a, b: jeweils eine A-Säule und eine B-Säule im Schnitt.

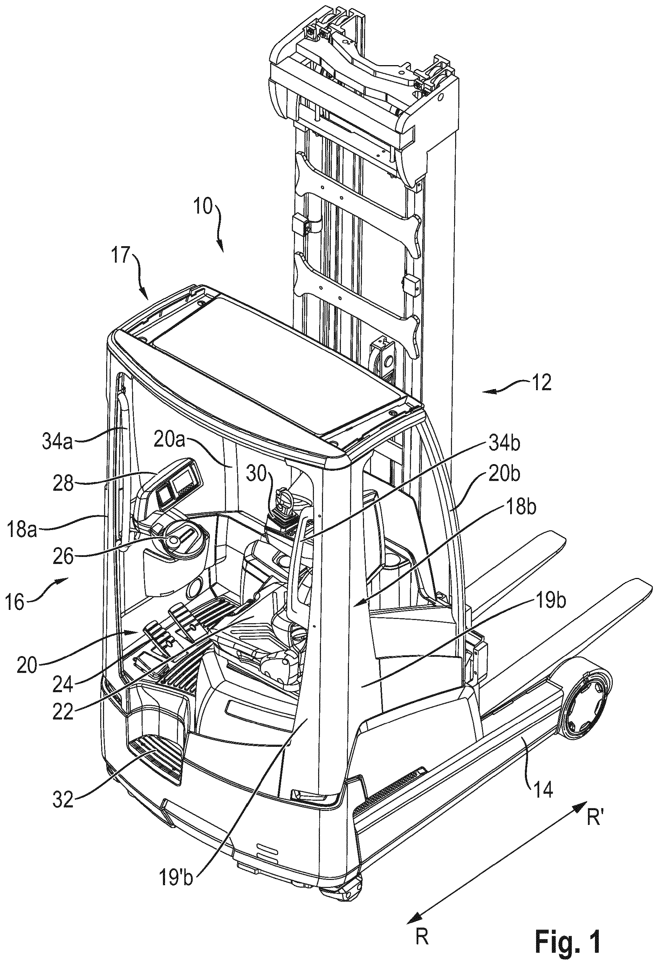

Fig. 1 zeigt ein Flurförderzeug 10, das als ein Schubmaststapler ausgebildet ist. Das Flurförderzeug besitzt einen Schubmast 12, der entlang der Radarme 14 verstellbar ist.

Eine Fahrerkabine 16 besitzt ein Fahrerschutzdach (in Fig. 1 nur unvollständig gezeigt), das von vier Säulen 18a, 18b, 20a, 20b getragen ist. Bezogen auf den Schubmast 12 werden die Säulen 20a, 20b als B-Säulen bezeichnet. Die B-Säulen 20a, 20b bestehen aus einem rohrförmigen Profil, das einen runden Querschnitt besitzt. Die den Einstiegsbereich 20 begrenzenden Säulen 18a, 18b werden nachfolgend als A-Säulen bezeichnet. Die Unterscheidung in A-Säulen und B-Säulen ist für das Flurförderzeug 10 willkürlich, ohne Bezug auf eine Fahrtrichtung festgelegt, da das Fahrzeug während seines regulären Einsatzes in beide Richtungen R und R' verfährt. Die beiden A-Säulen sind als Eckprofile ausgebildet, die flache Schenkel 19b und 19'b aufweisen. Beide Schenkel 19b und 19'b stehen mindestens in einem rechten Winkel, bevorzugt in einem Winkel von 100° bis 130° zueinander. In dem Ausführungsbeispiel sind beide A-Säulen als Eckprofile ausgebildet, wenn nur ein Eckprofil vorgesehen ist, dann ist bevorzugt die fahrernahe A-Säule als Eckprofil ausgebildet.

In Inneren der Fahrerkabine ist ein Fahrerplatz vorgesehen, der einen Fahrersitz 22 mit Fußpedalen 24, Lenkrad 26 und Bedienanzeige 28 besitzt. Auf der zum Schubmast weisenden Seite ist neben dem Fahrersitz 22 ferner ein Handbediengerät 30 vorgesehen. Der Fahrerplatz im Inneren der Fahrerkabine kann über eine Stufe 32 betreten werden, wobei seitlich an den A-Säulen angebrachte Handgriffe 34 helfen.

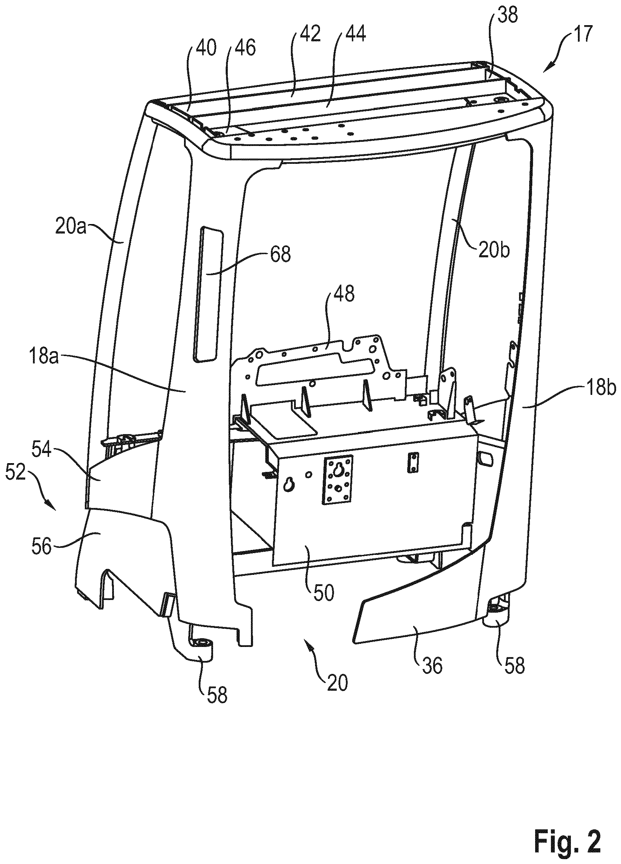

Fig. 2 zeigt die noch nicht in das Fahrzeug eingebaute Fahrerkabine mit einem Blick auf den Einstiegsbereich 20, der von den A-Säulen 18a, 18b begrenzt wird. Der Einstiegsbereich 20 wird seitlich von einem Einstiegsblech 36 begrenzt. Das Einstiegsblech 36 ist mit der A-Säule 18b verbunden. Zudem ist ein in Fig. 2 nicht gezeigter Einstiegsträger vorgesehen, mit dem die A-Säule 18b mit der A-Säule 18a bzw. mit dem Einstiegsblech 36 verbunden ist.

In Fig. 2 ist der nähere Aufbau des Fahrerschutzdachs 17 zu erkennen. Demnach sind die beiden Halteprofile 38, 40 aufrecht stehend angeordnet. Zwischen den Halteprofilen 38 und 40 sind zwei Querprofile 42 und 44 gespannt. Die Halteprofile 38, 40 sind senkrecht aus einem U-förmigen Flachblech 46 hochgebogen. Flachblech 46 bildet ein Kantteil. Die Querprofile 42, 44 sind in den Halteprofilen 38 und 40 schräg geneigt gegenüber der Senkrechten angeordnet.

In Fig. 2 ist ferner ein Halteabschnitt 48 zu erkennen, an dem eine Schutzscheibe für den Fahrer angebracht werden kann. Der ebenfalls dargestellte Komponentenbereich 50 dient dazu, für den Betrieb des Flurförderzeugs notwendige Komponenten gegenüber dem Innenraum abzugrenzen. Der Komponentenbereich 50 erstreckt sich von einer Rückwand der Fahrerkabine in den Kabineninnenraum.

In Fig. 2 ist ebenfalls der Aufbau einer Seitenwand 52 zu erkennen, die ein Verkleidungsblech 54 besitzt, das im Wesentlichen bündig mit der A-Säule 18a abschließt. Ebenfalls zu erkennen ist ein Trägerblech 56, das in der dargestellten Ausführung unterhalb des Verkleidungsblechs 54 die Seitenwand bildet. Nicht dargestellt in Fig. 2 ist ein unteres Verkleidungsblech, das an dem Trägerblech 56 befestigt wird. Oberes Verkleidungsblech 54 und unteres Verkleidungsblech 56 besitzen dabei gegeneinander eine besonders tiefe Fuge.

In Fig. 2 ferner zu erkennen sind Befestigungsmittel 58, über die die Fahrerkabine mit dem Fahrzeugrahmen befestigt werden kann. Die Befestigungsmittel sind hier in Form von Ösen oder Ringen ausgebildet.

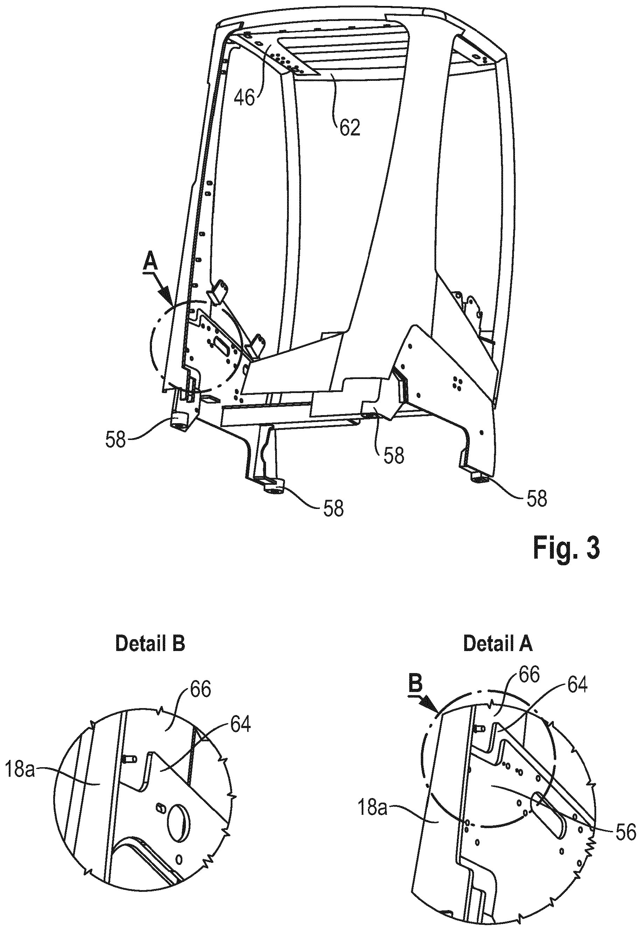

Fig. 3 zeigt eine weitere Ansicht der Fahrerkabine. Für das Fahrerschutzdach 17 ist das U-förmige Flachprofil 46 mit seinen abgekanteten Halteprofilen 38, 40 zu erkennen. Die freien Enden des U-förmigen Flachprofils 46 werden über ein Abschlussprofil 62 miteinander verbunden. Bei einer Ausgestaltung als Panoramadach ist das U-förmige Flachprofil zur Strebe 62 hin geschlossen, um eine Auflage für den Kleber und eine Panoramascheibe zu schaffen. Im Hinblick auf den Aufbau der Seitenwand zeigt das Detail A die Verwendung eines Zwischenblechs 64, das mit der A-Säule 18a flächig verschweißt ist. Detail B zeigt nur das Zwischenblech 64 in seiner angeschweißten Position, wobei das Zwischenblech 64 an einem Schenkel 66 des Eckprofils angeschweißt ist. An das Zwischenblech 64 wird von außen das obere Verkleidungsblech 54 befestigt, bevorzugt geschweißt. Auch ist es möglich, das obere Verkleidungsblech 54 einstückig mit einem Schenkel der angrenzenden A-Säule auszubilden. Innenseitig wird an dem Zwischenblech 64 ein Trägerblech 56 angeschweißt. Ein besonderer Effekt des weiter innenliegenden Trägerblechs 56 ist, dass das untere Verkleidungsteil, das an dem Trägerblech 56 befestigt wird und unterhalb des oberen Verkleidungsteils 54 liegt, weiter zurückspringend seine Befestigung erfährt und somit eine besonders tiefe Fuge zwischen den oberen Verkleidungsteilen und dem unteren Verkleidungsteil gebildet werden kann.

Bei der vorstehend erläuterten Fahrerkabine spielen eine Reihe von Effekten zusammen, um für den Fahrer eine gute Sicht bereitzustellen. Ein Aspekt ist, dass durch die gebogene Form der A-Säulen 18a, 18b bei größtmöglicher Stabilität nur ein kleiner Winkelbereich für den Fahrer in seiner Sicht verdeckt wird. Zusätzlich ist es ohne Einbußen der Stabilität möglich, eine Sichtdurchbrechung 68 vorzusehen. Auch ist es möglich, die Seitenwände aufgrund der stabilisierenden Wirkung des Zwischenblechs und der zusätzlichen Aussteifung durch das Trägerblech relativ weit in Richtung des Fahrzeugrahmens herunterzuziehen, so dass auch hierdurch ein großes Sichtfeld entsteht.

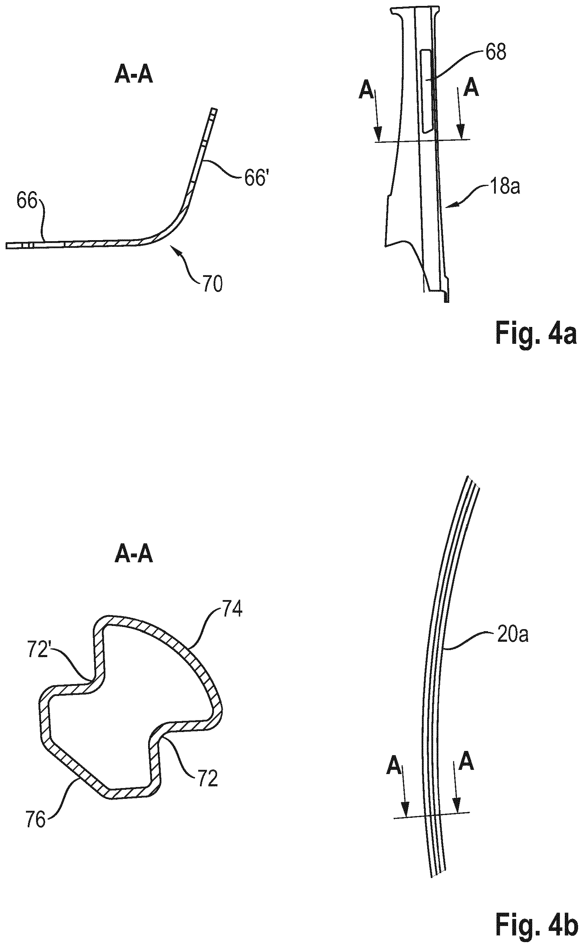

Fig. 4a zeigt eine A-Säule 18a mit ihrer Sichtdurchbrechung 68. Ferner ist ein Schnitt entlang der Linie A-A dargestellt, in dem die beiden Schenkel 66, 66' des Eckprofils zu erkennen sind. Die Schenkel erstrecken sich im Wesentlichen gerade von einem abgerundeten Übergangsbereich 70.

Fig. 4b zeigt eine B-Säule 20a mit ihrem Schnitt A-A. Der Querschnitt der B-Säule 20a ist hohl und besitzt eine im Wesentlichen achtförmige Gestalt als ein rundes Doppelprofil. Die Gestalt besitzt zwei einander gegenüberliegende Taillen 72, 72', die sich in einem abgerundeten Abschnitt 74 und einem abgeflachten Abschnitt 76 erstrecken. Die Abschnitte 74 und 76 sind gegenüber den Taillenabschnitten ausgebaucht.

### Bezugszeichenliste:

- 10: Flurförderzeug
- 12: Schubmast
- 14: Radarme
- 16: Fahrerkabine
- 17: Fahrerschutzdach
- 18a,b: A-Säulen
- 19b, 19'b: Schenkel
- 20: Einstiegsbereich
- 20a,b: B-Säulen
- 22: Fahrersitz
- 24: Fußpedalen
- 26: Lenkrad
- 28: Bedienanzeige
- 30: Handbediengerät
- 32: Stufe
- 34: Handgriffe
- 36: Einstiegsblech
- 38: Halteprofil
- 40: Halteprofil
- 42: Querprofil
- 44: Querprofil
- 46: U-förmiges Flachprofil
- 48: Halteabschnitt
- 50: Begrenzungsbereich
- 52: Seitenwand
- 54: oberes Verkleidungsblech
- 56: Trägerblech
- 58: Befestigungsmittel
- 62: Abschlussprofil
- 64: Zwischenblech
- 66, 66': Schenkel
- 68: Sichtdurchbrechung
- 70: Übergangsbereich
- 72, 72': Taille
- 74: abgerundeter Abschnitt
- 76: abgeflachter Abschnitt

## Patentansprüche

1. Fahrerkabine für ein Flurförderzeug (10) mit
- einem von vier Säulen getragenen Fahrerschutzdach (17), von denen zwei als A-Säulen (18a, 18b) und zwei als B-Säulen (20a, 20b) ausgebildet sind,
- wobei jeweils eine Seitenwand (52) sich zwischen einer der A-Säulen (18a, 18b) und einer der B-Säulen (20a, 20b) erstreckt, eine Abschlusswand sich zwischen den B-Säulen (20a, 20b) und ein Einstiegsbereich (20) sich zwischen den A-Säulen (18a, 18b) erstreckt,
- die B-Säulen (20a, 20b) jeweils aus einem Rohrprofil und mindestens eine der A-Säulen (18a, 18b) aus einem Eckprofil gebildet ist, das zwei winkelig zueinander angeordnete Schenkel (66) aufweist.

2. Fahrerkabine nach Anspruch 1, **dadurch gekennzeichnet, dass** beide A-Säulen als ein Eckprofil ausgebildet sind, von denen jedes zwei winkelig zueinander angeordnete Schenkel aufweist.

3. Fahrerkabine nach Anspruch 1 oder 2, **dadurch gekennzeichnet, dass** die Schenkel des oder der Eckprofile als flache Schenkel (66) ausgebildet sind, die über einen gerundeten Übergangsbereich miteinander verbunden sind, der eine Außenkante der Fahrerkabine bildet.

4. Fahrerkabine nach einem der Ansprüche 1 bis 3, **dadurch gekennzeichnet, dass** mindestens ein Befestigungsmittel (58) zur Befestigung der Fahrerkabine an einem Fahrzeugrahmen vorgesehen ist.

5. Fahrerkabine nach einem der Ansprüche 1 bis 4, **dadurch gekennzeichnet, dass** das Fahrerschutzdach (17) ein U-förmiges Flachprofil (46) aufweist, dessen Schenkeln jeweils ein aufrecht stehendes Halteprofil (38, 40) bilden, an denen jeweils die Enden von zwischen den Schenkeln verlaufenden Querprofilen (42, 44) gehalten sind.

6. Fahrerkabine nach Anspruch 5, **dadurch gekennzeichnet, dass** ein Abschlussprofil (62) die freien Schenkel des U-förmigen Flachprofils (46) miteinander verbindet und einen umlaufenden Dachrahmen bildet.

7. Fahrerkabine nach einem der Ansprüche 1 bis 6, **dadurch gekennzeichnet, dass** jede der Seitenwände (52) ein endseitig mit A-Säule (18a, 18b) und B-Säule (20a, 20b) verbundenes Zwischenblech (66) aufweist, an dem auf der zum Innenraum der Fahrerkabine weisenden Seite ein Trägerblech (56) angebracht ist.

8. Fahrerkabine nach Anspruch 7, **dadurch gekennzeichnet, dass** auf der zur Außenseite der Fahrerkabine weisenden Seite des Zwischenblechs (66) ein bündig mit der A-Säule abschließendes oberes Verkleidungsblech (54) angebracht ist.

9. Fahrerkabine nach Anspruch 7 oder 8, **dadurch gekennzeichnet, dass** auf der zur Außenseite der Fahrerkabine weisenden Seite des Trägerblechs (56) ein unteres Verkleidungsblech unter Bildung einer Fuge gegenüber dem oberen Verkleidungsblech (54) angebracht ist.

10. Fahrerkabine nach einem der Ansprüche 1 bis 9, **dadurch gekennzeichnet, dass** der Einstiegsbereich (20) auf einer Seite durch eine der A-Säulen (18a, 18b) begrenzt und auf der anderen Seite durch ein an der anderen A-Säule (18a, 18b) angebrachtes Einstiegsblech (36) begrenzt ist.

11. Fahrerkabine nach einem der Ansprüche 1 bis 10, **dadurch gekennzeichnet, dass** die Säulen mit dem Fahrerschutzdach (17) verschweißt sind.

12. Fahrerkabine nach einem der Ansprüche 1 bis 11, **dadurch gekennzeichnet, dass** die A-Säulen mit den Zwischenblechen (64) der Seitenwände und die B-Säulen mit dem Verkleidungsblech (54) und dem Trägerblech (56) verschweißt sind.

13. Fahrerkabine nach einem der Ansprüche 1 bis 12, **dadurch gekennzeichnet, dass** die Abschlusswand einen Halteabschnitt (48) für eine Fahrerschutzscheibe aufweist.

14. Fahrerkabine nach einem der Ansprüche 1 bis 13, **dadurch gekennzeichnet, dass** in mindestens einer der A-Säulen (18a, 18b) eine Sichtdurchbrechung (68) vorgesehen ist.

15. Fahrerkabine nach einem der Ansprüche 1 bis 14, **dadurch gekennzeichnet, dass** die als Eckprofil ausgebildete A-Säule benachbart zu einem Fahrerplatz angeordnet ist.

## Claims

1. A driver's cab for an industrial truck (10) with
- a driver's canopy (17) supported by four pillars, of which two are designed as A-pillars (18a, 18b) and two are designed as B-pillars (20a, 20b),
- wherein one side wall (52) in each case extends between one of the A-pillars (18a, 18b) and one of the B-pillars (20a, 20b), an end wall extends between the B-pillars (20a, 20b), and an entry region (20) extends between the A-pillars (18a, 18b),
- the B-pillars (20a, 20b) are each formed from a tubular profile and at least one of the A-pillars (18a, 18b) is formed from a corner profile which has two legs (66) arranged at an angle to each other.

2. The driver's cab according to claim 1, **characterized in that** both A-pillars are designed as a corner profile, each of which has two legs arranged at an angle to each other.

3. The driver's cab according to claim 1 or 2, **characterized in that** the legs of the corner profile(s) are designed as flat legs (66) which are connected to each other via a rounded transition region which forms an outer edge of the driver's cab.

4. The driver's cab according to one of claims 1 to 3, **characterized in that** at least one fastening means (58) is provided for fastening the driver's cab to a vehicle frame.

5. The driver's cab according to one of claims 1 to 4, **characterized in that** the driver's canopy (17) has a U-shaped flat profile (46), the legs of which each form an upright holding profile (38, 40), on which the ends of transverse profiles (42, 44) running between the legs are held.

6. The driver's cab according to claim 5, **characterized in that** an end profile (62) connects the free legs of the U-shaped flat profile (46) to each other and forms a circumferential roof frame.

7. The driver's cab according to one of claims 1 to 6, **characterized in that** each of the side walls (52) has an intermediate plate (66) which is connected at the end to an A-pillar (18a, 18b) and a B-pillar (20a, 20b) and to which a support plate (56) is attached on the side facing toward the inside of the driver's cab.

8. The driver's cab according to claim 7, **characterized in that** an upper cover plate (54) terminating flush with the A-pillar is attached on the side of the intermediate plate (66) facing toward the outside of the driver's cab.

9. The driver's cab according to claim 7 or 8, **characterized in that** a lower cover plate is attached on the side of the support plate (56) facing toward the outside of the driver's cab by forming a joint with respect to the upper cover plate (54).

10. The driver's cab according to one of claims 1 to 9, **characterized in that** the entry region (20) is delimited on one side by one of the A-pillars (18a, 18b) and on the other side by an entry plate (36) attached to the other A-pillar (18a, 18b).

11. The driver's cab according to one of claims 1 to 10, **characterized in that** the pillars are welded to the driver's canopy (17).

12. The driver's cab according to one of claims 1 to 11, **characterized in that** the A-pillars are welded to the intermediate plates (64) of the side walls and the B-pillars are welded to the cover plate (54) and the support plate (56).

13. The driver's cab according to one of claims 1 to 12, **characterized in that** the end wall has a holding section (48) for a driver protection pane.

14. The driver's cab according to one of claims 1 to 13, **characterized in that** a viewing opening (68) is provided in at least one of the A-pillars (18a, 18b).

15. The driver's cab according to one of claims 1 to 14, **characterized in that** the A-pillar designed as a corner profile is arranged adjacent to a driver's seat.

## Revendications

1. Cabine de conducteur pour un chariot de manutention (10), comprenant
un toit de protection de conducteur (17) supporté par quatre colonnes, dont deux sont conçues comme des colonnes A (18a, 18b) et deux comme des colonnes B (20a, 20b),
dans laquelle une paroi latérale (52) s'étend respectivement entre l'une des colonnes A (18a, 18b) et l'une des colonnes B (20a, 20b), une paroi terminale s'étend entre les colonnes B (20a, 20b) et une zone d'accès (20) s'étend entre les colonnes A (18a, 18b),
les colonnes B (20a, 20b) sont formées respectivement par un profilé tubulaire et l'une au moins des colonnes A (18a, 18b) est formée par un profilé de coin, lequel présente deux branches (66) disposées de façon angulaire l'une par rapport à l'autre.

2. Cabine de conducteur selon la revendication 1, **caractérisée en ce que** les deux colonnes A sont conçues comme un profilé de coin, parmi lesquels chacun présente deux branches disposées de façon angulaire l'une par rapport à l'autre.

3. Cabine de conducteur selon la revendication 1 ou 2, **caractérisée en ce que** les branches du ou des profilés de coin sont conçues comme des branches plates (66) reliées entre elles par le biais d'une zone de transition arrondie, laquelle forme un bord extérieur de la cabine de conducteur.

4. Cabine de conducteur selon l'une des revendication 1 à 3, **caractérisée en ce qu'**il est prévu au moins un moyen de fixation (58) destiné à fixer la cabine de conducteur à un châssis de véhicule.

5. Cabine de conducteur selon l'une des revendications 1 à 4, **caractérisée en ce que** le toit de protection de conducteur (17) présente un profilé creux en forme de U (46), dont les branches forment respectivement un profilé de maintien vertical (38, 40), sur lequel sont maintenues respectivement les extrémités de profilés transversaux (42, 44) s'étendant entre les branches.

6. Cabine de conducteur selon la revendication 5, **caractérisée en ce qu'**un profilé terminal (62) relie entre elles les branches du profilé creux en forme de U (46) et forme un cadre de toit périphérique.

7. Cabine de conducteur selon l'une des revendications 1 à 6 **caractérisée en ce que** chacune des parois latérales (52) présente une tôle intermédiaire (66) reliée côté extrémité à la colonne A (18a, 18b) et la colonne B (20a, 20b), à laquelle une tôle de support (56) est fixée sur le côté tourné vers l'espace intérieur de la cabine de conducteur.

8. Cabine de conducteur selon la revendication 7, **caractérisée en ce qu'**une tôle d'habillage supérieure (54) se terminant en affleurement avec la colonne A est fixée sur le côté de la tôle intermédiaire (66) tourné vers le côté extérieur de la cabine de conducteur.

9. Cabine de conducteur selon la revendication 7 ou 8, **caractérisée en ce qu'**une tôle d'habillage inférieure est fixée sur le côté de la tôle de support (56) tourné vers le côté extérieur de la cabine de conducteur, en formant un joint par rapport à la tôle d'habillage supérieure (54).

10. Cabine de conducteur selon l'une des revendications 1 à 9, **caractérisée en ce que** la zone d'accès (20) est délimitée par l'une des colonnes A (18a, 18b) sur un côté et par une tôle d'accès (36) fixée à l'autre colonne A (18a, 18b) sur l'autre côté.

11. Cabine de conducteur selon l'une des revendications 1 à 10, **caractérisée en ce que** les colonnes sont soudées avec le toit de protection de conducteur (17).

12. Cabine de conducteur selon l'une des revendications 1 à 11, **caractérisée en ce que** les colonnes A sont soudées avec les tôles intermédiaires (64) des parois latérales et les colonnes B sont soudées avec la tôle d'habillage (54) et la tôle de support (56).

13. Cabine de conducteur selon l'une des revendications 1 à 12, **caractérisée en ce que** la paroi terminale présente une section de maintien (48) pour une vitre de protection de conducteur.

14. Cabine de conducteur selon l'une des revendications 1 à 13, **caractérisée en ce qu'**il est prévu une fenêtre de vue (68) dans l'une au moins des colonnes A (18a, 18b).

15. Cabine de conducteur selon l'une des revendications 1 à 14, **caractérisée en ce que** la colonne A conçue comme un profilé de coin est disposée à proximité d'un poste de conducteur.
